## Europäisches Patentamt
## European Patent Office
## Office européen des brevets

(19)

(11) Veröffentlichungsnummer: **0 060 913**
**A1**

(12) # EUROPÄISCHE PATENTANMELDUNG

(21) Anmeldenummer: **81102224.3**

(22) Anmeldetag: **25.03.81**

(51) Int. Cl.³: **B 62 B 9/00**

(43) Veröffentlichungstag der Anmeldung:
**29.09.82** Patentblatt **82/39**

(84) Benannte Vertragsstaaten:
**AT BE CH FR IT LI SE**

(71) Anmelder: **Odenwälder Steppdeckenfabrik A. u. H. Volk**
**Mückentaler Strasse 15**
**D-6951 Limbach/Baden(DE)**

(72) Erfinder: **Bangert, Linda**
**Mückentaler Strasse 15**
**D-6951 Limbach/Baden(DE)**

(74) Vertreter: **Ullrich, Thurmod, Dr.**
**Patentanwälte Dr. Ullrich-Dr. Hasse-Dr. Franke**
**Gaisbergstrasse 3**
**D-6900 Heidelberg 1(DE)**

(54) Fussack für Kindersportwagen, insbesondere sogenannte Buggys.

(57) Die Erfindung betrifft einen Fußsack für Kindersportwagen, insbesondere sogenannte Buggys, mit einem rechteckig geformten, nach oben offenen, die Beine des Kindes umschließenden unteren Sackteil, dessen hintere Wandung nach oben über die Sacköffnung hinaus verlängert ist und als Polsterung für die Rückenlehne des Kindersportwagens dient, der dadurch gekennzeichnet ist, daß er doppelwandig mit Steppung und Füllung (1) ausgebildet ist und der untere Sackteil (2) in Höhe des Gesäßes einen die Hüften des Kindes umschließenden eingearbeiteten Sitzteil (3) aufweist, während der obere Lehnen- oder Rückenteil (4) am Kopfende (5) mit einem umlaufenden gepolsterten Wulst (6) ausgestattet ist. Durch die Kombination des in den unteren Sackteil (2) eingearbeiteten Sitzteils (3) und die um den oberen Teil (4) angearbeitete wulstartige Polsterung (6) bei einem allseits mit Steppung und Füllung (1) ausgestatteten Sportwagenfußsack gemäß der Erfindung werden alle Bedingungen, wie Wärmehaltung aller Körperteile des Kindes, gute Polsterung und Bewegungsfreiheit bei gleichzeitiger Anpassung an die Konstruktionsmerkmale eines als Buggy bekannten Kindersportwagens erfüllt.

EP 0 060 913 A1

Die Erfindung betrifft einen Fußsack für Kindersportwagen gemäß dem Oberbegriff des Patentanspruchs 1.

Fußsäcke für Kindersportwagen für den Gebrauch bei warmer und auch bei kalter Witterung sind in zahlreichen Ausgestaltungsformen und Arten bekannt und auf dem Markt. Speziell für die seit einigen Jahren verwendeten leichten Kindersportwagen mit meist vier sehr kleinen, im Abstand voneinander angeordneten Doppelrädern, genannt Buggys, gibt es jedoch keine Fußsäcke, sodaß sich der Verbraucher mit anderen auf dem Markt befindlichen Fußsäcken, die jedoch für diese Buggys nicht besonders geeignet sind, behelfen muß. Das Oberteil bekannter auf dem Markt befindlicher Fußsäcke bietet dem Kind darüber hinaus wenig Schutz gegen die Witterung.

Die Aufgabe der Erfindung besteht nun darin einen Fußsack für Kindersportwagen zu schaffen, der den technischen Bedürfnissen bei einem Buggy angepaßt ist und mit Vorteil bei solchen Sportwagen verwendet werden kann.und der gleichzeitig eine gute Isolierung besitzt, sodaß die Körperteile und auch der Oberkörper des Kindes warm gehalten werden.

Die Lösung dieser Aufgabe wird durch die im Kennzeichen des Patentanspruchs 1 beschriebene technische Lehre vermittelt. Die Unteransprüche 2 bis 5 beinhalten spezielle Ausführungsformen der Erfindung.

Durch den eingearbeiteten Sitzteil hat das Kind in dem auf die Verhältnisse des Sportwagens zugeschnittenen Fußsack genügend Bewegungsfreiheit beim Sitzen und ist gleichzeitig durch die doppelwandige Ausbildung des unteren Sackteils mit einer Steppung und den eingeschlossenen Luftpolstern gegen die Witterung geschützt. Die um den oben am Lehnen- oder Rückenteil eingearbeitete wulstartige Polsterung, als sogenannte Eskimo-Rolle bezeichnet, bietet dem Kind besonderen Schutz am Kopf und an den Ohren.

Ein weiterer wesentlicher Vorteil des erfindungsgemäßen Fußsacks besteht darin, daß er gewendet und von
beiden Seiten gleichermaßen für die vorgesehenen Zwecke
verwendet werden kann. Der Fußsack ist auch voll waschbar, ohne daß die Füllung in irgend einer Weise Schaden
leidet.

Der als Lehnen- oder Rückenteil ausgebildete Oberteil
des Sackes ist am oberen Ende beiderseits mit verstellbaren
Bändern ausgestattet. Am Rückenteil ist zweckmäßig beiderseitig ein Einsteckteil angearbeitet.

Mit Hilfe der verstellbaren Bänder am Rücken- oder
Oberteil des Fußsackes kann dieser bei jedem auf dem Markt
befindlichen Buggy-Modell verwendet werden. Der Einsteckteil am Rückenteil des Fußsackes dient dazu diesen über
die Lehne des Sportwagens zu ziehen, sodaß der Fußsack auch
bei den Bewegungen des Kindes unverrückbar auf dem Sportwagen gehalten wird.

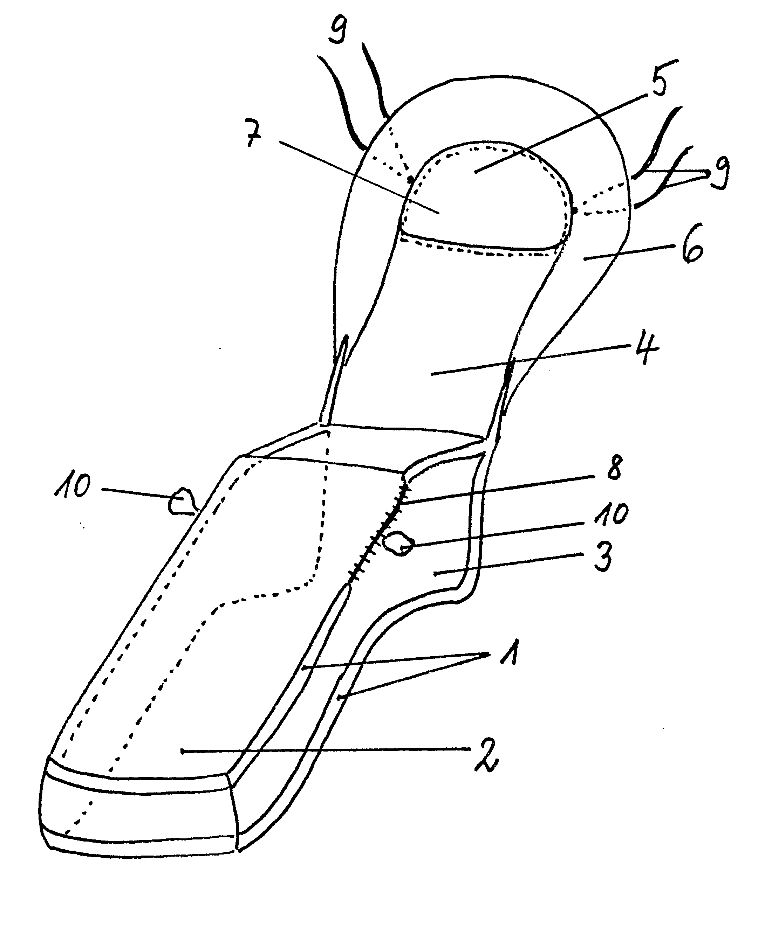

In der Zeichnung ist eine Ausführungsform der Erfindung dargestellt. Sie zeigt den erfindungsgemäßen Fußsack in perspektivischer Ansicht.

Der Fußsack besteht aus dem unteren Sackteil 2 mit
dem erweiterten eingearbeiteten Sitzteil 3 an den sich der
Rücken- oder Lehnenteil 4 anschließt. Der Fußsack ist mit
einer Füllung und Steppung 1 ausgestattet. Am Kopfende 5
sind beiderseits außen und innen je eine Einsteckteil 7 zum
Einhängen in die Lehne des Sportwagens angearbeitet. Das
Kopfende 5 ist mit einer wulstartigen Polsterung, einer
sogenannten Eskimorolle 6 versehen. Die Bänder 9 und die
Schlaufen 10 dienen zum Befestigen des Fußsacks am Sportwagen, sodaß dieser auch bei den Bewegungen des Kindes nicht
verrutscht. Der Sackunterteil 2 kann zusätzlich mit einem
zweckmäßig seitlich angebrachten Reißverschluß 8 ausgestattet
sein.

# DR. ULLRICH · DR. HASSE · DR. FRANKE   0060913

PATENTANWÄLTE IN HEIDELBERG UND MÜNCHEN

**69 Heidelberg 1**
Gaisbergstraße 3
Tel. (0 62 21) 2 53 35

Unser Zeichen

Odenwälder Steppdeckenfabrik A. u. H. Volk, Mückentaler
Straße 15, 6951 Limbach/Baden

Fußsack für Kindersportwagen, insbesondere sogenannte Buggys

P a t e n t a n s p r ü c h e
=================================

1. Fußsack für Kindersportwagen, insbesondere sogenannte
Buggys, mit einem rechteckig geformten, nach oben
offenen, die Beine des Kindes umschließenden unteren
Sackteil, dessen hintere Wandung nach oben über die
Sacköffnung hinaus verlängert ist und als Polsterung
für die Rückenlehne des Kindersportwagens dient, dadurch gekennzeichnet, daß er doppelwandig mit Steppung
und Füllung (1) ausgebildet ist und der untere Sackteil (2) in Höhe des Gesäßes einen die Hüften des Kindes
umschließenden eingearbeiteten Sitzteil (3) aufweist,
während der obere Lehnen- oder Rückenteil (4) am Kopfende (5) mit einem umlaufenden gepolsterten Wulst (6)
ausgestattet ist.

2. Fußsack nach Anspruch 1, dadurch gekennzeichnet, daß
er umwendbar und von beiden Seiten verwendbar ist.

3. Fußsack nach Anspruch 1 und 2, dadurch gekennzeichnet, daß er am Kopfende (5) sowohl an der Innenseite als auch an der Außenseite mit einem Einsteckteil (7) für die Rückenlehne des Sportwagens ausgestattet ist.

4. Fußsack nach Anspruch 1 bis 3, dadurch gekennzeichnet, daß der untere Sackteil (2) mit einem seitlichen Reißverschluß (8) ausgestattet ist.

5. Fußsack nach Anspruch 1 bis 4, dadurch gekennzeichnet, daß der Rückenteil (4) am oberen Ende mit verstellbaren Bändern (9) und der untere Sackteil (2) mit Befestigungsschlaufen (10) versehen ist.

-----------------------------------

| Kategorie | EINSCHLÄGIGE DOKUMENTE | betrifft Anspruch | KLASSIFIKATION DER ANMELDUNG (Int Cl³) |
|---|---|---|---|
| | Kennzeichnung des Dokuments mit Angabe, soweit erforderlich, der maßgeblichen Teile | | |
| | GB - A - 1 584 497 (ANTONY MASSEY)<br>* Figuren 1-3; Seiten 1-3 * | 1,4 | B 62 B 9/00 |
| | DE - A - 2 906 125 (ECKERT)<br>* Figuren 1-3; Seite 7, Zeilen 10-23; Seiten 8-10 * | 1 | |
| | DE - A - 2 350 917 (PEGGY)<br>* Figuren 1-7; Seite 8, Zeilen 13-25; Seiten 9-15 * | 1 | |

RECHERCHIERTE SACHGEBIETE (Int. Cl.³)

B 62 B

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-11-1981 | VANNESTE |

EPA form 1503.1 06.78